# EUROPEAN PATENT APPLICATION

(11) **EP 1 693 240 A2**
(43) Date of publication of application: **23.08.2006**
(21) Application number: 06250816.3
(22) Date of filing: 16.02.2006
(51) Int. Cl.: B60K 15/035, B67D 5/32

(54) **Method of forming a monolithic element including multiple conduits**

(30) Priority: 17.02.2005 US 653827 P
(71) Applicant: STANT MANUFACTURING INC., Connersville, IN 47331-1696 (US)
(72) Inventor: McClung, Chad A., Connersville, Indiana 47331 (US)
(74) Representative: Croston, David

(57) **Abstract**

A method of forming a pair of conduits using blow-molding techniques is disclosed. A parison is inflated and deformed to form a pair of interconnected conduits.

## Description

This application claims priority under 35 U.S.C. § 119(e) to U.S. Provisional Application Serial No. 60/653,827, filed February 17, 2005, which is expressly incorporated by reference herein.

### BACKGROUND

The present disclosure relates to blow-molding methods, and particularly to methods of forming a monolithic element including multiple conduits. More particularly, the present disclosure relates to formation of a fuel tank filler neck using a blow-molding process.

### SUMMARY

In accordance with the present disclosure, a parison is squeezed or pinched along its length in a closed blow mold cavity to form a monolithic element comprising two side-by-side conduits interconnected by a web connector. In an illustrated embodiment, the monolithic element is a fuel tank filler neck.

In an illustrative manner, a parison is located in a closed blow mold cavity and inflated. This inflated parison is pinched in the closed blow mold cavity to form a monolithic element comprising first and second conduits interconnected by a web connector.

Features of the present disclosure will become apparent to those skilled in the art upon consideration of the following detailed description of illustrative embodiments exemplifying the best mode of carrying out the disclosure as presently perceived.

### BRIEF DESCRIPTION OF THE DRAWINGS

The detailed description particularly refers to the accompanying figures in which:

Fig. 1 is a perspective view of a fuel tank coupled to a tank filler neck including a two-passageway fill tube in accordance with the present disclosure;

Fig. 2 is an enlarged perspective view of a portion of the fill tube of Fig. 1 showing a first conduit formed to include a large-diameter passageway and a second conduit formed to include a small-diameter passageway and arranged to extend alongside the first conduit and coupled to the first conduit by a web connector;

Figs. 3-6 illustrate a method of forming the two-passageway fill tube of Fig. 2 in a "closed" blow mold using "first-stage" and "second-stage" mold components;

Fig. 3A is a sectional view showing a closed blow moid in accordance with the present disclosure and showing an extruded uninflated parison drawn into a mold cavity formed between first and second first-stage mold dies by a vacuum applied to the mold cavity;

Fig. 3B is a sectional view taken along line 3B-3B of Fig. 3A showing first and second second-stage mold slides mounted for movement toward and away from one another in a space provided between the two first-stage mold dies and in communication with the mold cavity containing the uninflated parison;

Fig. 4A is a sectional view similar to Fig. 3A after "inflation air" has been blown into the closed blow mold to inflate the parison deployed in the mold cavity;

Fig. 4B is a sectional view taken along line 4B-4B of Fig. 4A showing inflation of the parison prior to movement of the second-stage mold slides toward one another to begin to deform the inflated parison;

Fig. 5A is a sectional view similar to Figs. 3A and 4A showing an initial stage of formation of a smaller second conduit to the left of a larger first conduit conducting inflation air therethrough;

Fig. 5B is a sectional view taken along line 5B-5B of Fig. 5A showing movement of the two second-stage mold slides toward one another to "pinch" the inflated parison to begin to form the smaller second conduit and showing inflation air flowing from the larger first conduit into the smaller second conduit to inflate the smaller second conduit in a small mold cavity defined by the two second-stage mold slides;

Fig. 6A is a sectional view similar to Figs. 3A-5A showing completed formation of the two-passageway fill tube shown in Figs. 1 and 2 in the closed blow mold; and

Fig. 6B is a sectional view taken along line 6B-6B of Fig. 6A showing complete formation of the smaller second conduit and a web connector interconnecting the first and second conduits in the small mold cavity defined by the two second-stage mold slides as well as complete formation of the larger first conduit in a moid cavity formed by the first and second second-stage moid slides in cooperation with the second first-stage mold die.

### DETAILED DESCRIPTION OF THE DRAWINGS

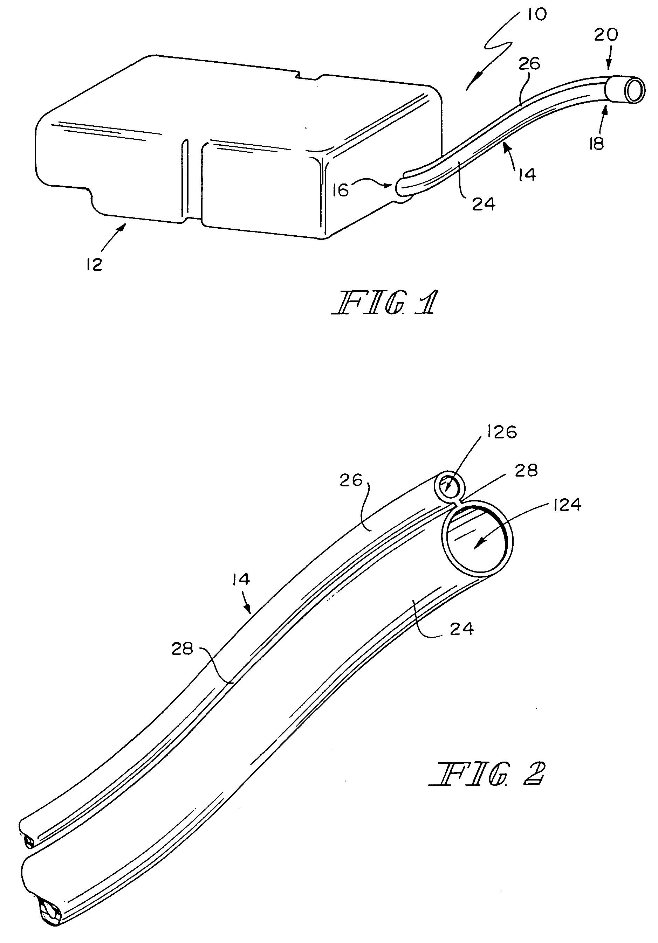

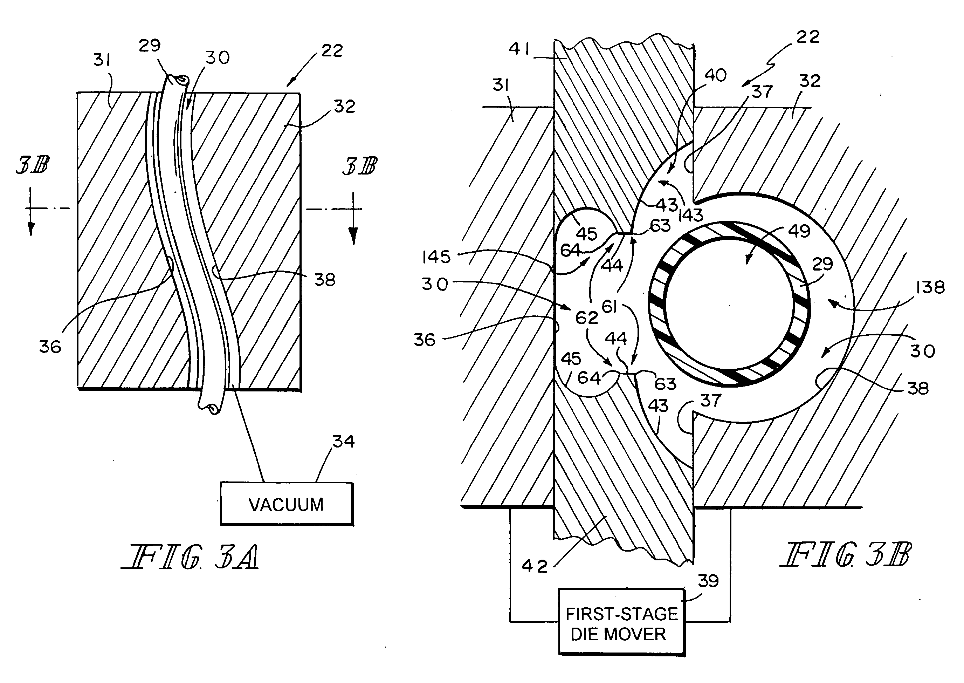

A vehicle fuel system 10 comprises a fuel tank 12, a filler neck 14 having a lower end 16 coupled to fuel tank 12, and an inlet cup 18 coupled to an outer end 20 of filler neck 14 and adapted to mate with a closure cap (not shown) as shown in Fig. 1. In the illustrated embodiment, filler neck 14 is a monolithic element (shown, for example, in Fig. 2) comprising multiple conduits and is formed in a "closed" blow mold 22 using a two-stage "blow-molding" process shown, for example, in Figs. 3A-6B.

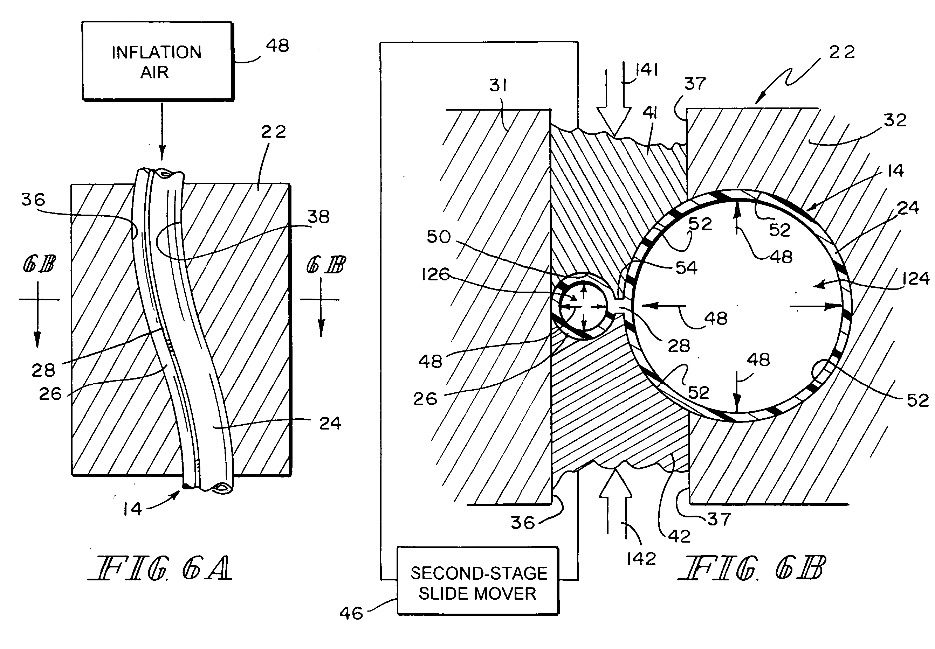

Filler neck 14 includes a first conduit 24 formed to include a large-diameter passageway 124, a second conduit 26 formed to include a small-diameter passageway 126, and a web connector 28 interconnecting first and second conduits 24, 26 as shown, for example, in Figs. 2 and 6B. In the illustrated embodiment, web connector 28 extends in an uninterrupted manner along the length of the first and second conduits. It is within the scope of this disclosure to provide interruptions in web connector 28 along its length. It is within the scope of this disclosure to vary the relative size and scale of conduits 24, 26 and web connector 28 to meet any particular flow and size requirements associated with filler neck 14.

In the illustrated embodiment, first conduit 24 is used to conduct liquid fuel from a fuel-dispensing pump nozzle (not shown) into a fuel reservoir formed in an interior region of fuel tank 12. It is within the scope of the present disclosure to use second conduit 26 to provide a "nozzle shut-off" tube for communicating fuel vapor from fuel tank 12 to a pump nozzle-receiving chamber formed in outer end 20 of filler neck 14 to facilitate automatic shutoff of the pump nozzle during fuel tank refueling in accordance with U.S. Patent No. 5,687,778, which patent is hereby incorporated by reference herein. It is also within the scope of the present disclosure to use second conduit 26 to provide a fuel vapor tube to communicate fuel vapor pressure to a fuel vapor control valve (not shown) associated with fuel tank 12 in accordance with U.S. Patent No. 5,449,029, which patent is hereby incorporated by reference herein.

As suggested, for example, in Figs. 3A and 3B, an extruded parison 29 is drawn using a vacuum 34 through an elongated blow mold cavity 30 defined by first and second "first-stage" mold dies 31, 32 and by first and second "second-stage" mold slides 41, 42. These mold dies 31, 32 and mold slides 41, 42 are included in blow mold 22.

In the illustrated embodiment, first first-stage mold die 31 includes a substantially flat surface 36 facing toward parison 29 and second first-stage mold die 32 includes a C-shaped curved surface 38 facing toward parison 29 and toward flat surface 36. As used herein, "flat" means substantially even and smooth. A first-stage die mover 39 is provided as suggested diagrammatically in Fig. 3B for moving mold die 31 relative to mold die 32 to open and close blow mold 22. Blow mold 22 is shown in a closed position in Figs. 3A and 3B.

J In the illustrated embodiment, the two second-stage mold slides 41, 42 are mounted to move and away from one another in a space 40 provided between the two first-stage mold dies 31, 32 as suggested, for example, in Fig. 3B. Each of first and second second-stage mold slides 41, 42 includes a first curved surface 43, a second curved surface 45, and a straight surface 44 interconnecting first and second curved surfaces 43, 45 as also suggested in Fig. 3B. A second-stage slide mover 46 is provided as suggested diagrammatically in Figs. 5B and 6B for moving mold slide 41 relative to mold slide 42 to assist in pinching parison 29 to form first conduit 24, second conduit 26, and web connector 28. In an illustrative embodiment, first and second second-stage mold slides 41, 42 slide back and forth on flat surface 36 on first first-stage mold die 31 and on flat surface 37 on second first-stage mold die 32.

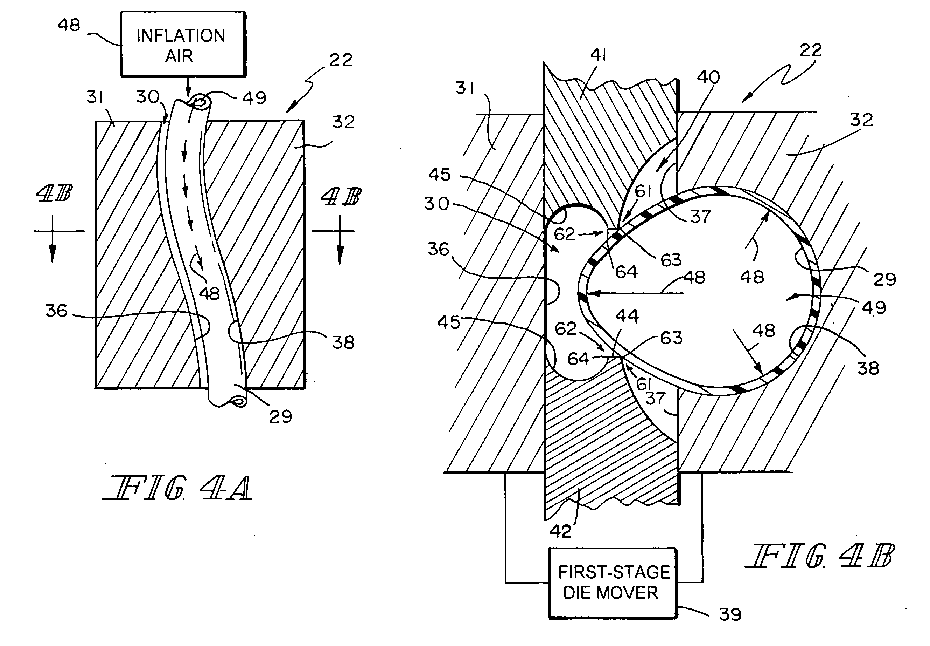

As suggested in Figs. 4A and 4B, inflation air 48 is blown into a central passageway 49 formed in parison 29 to inflate parison 29 while parison 29 is deployed in mold cavity 30. As suggested, for example, in Fig. 4B, inflation air 48 urges a portion of parison 29 into engagement with C-shaped curved surface 38 of second first-stage mold die 32 and other portions of parison 29 further into space 40 to engage portions of the two second-stage mold slides 41, 42. Such inflation may provide parison 29 with, for example, an "egg-like" cross-sectional shape as shown in Fig. 4B or may provide parison 29 with other suitable interim shapes. Such inflation of parison 29 occurs during a first stage of the blow-molding process disclosed herein.

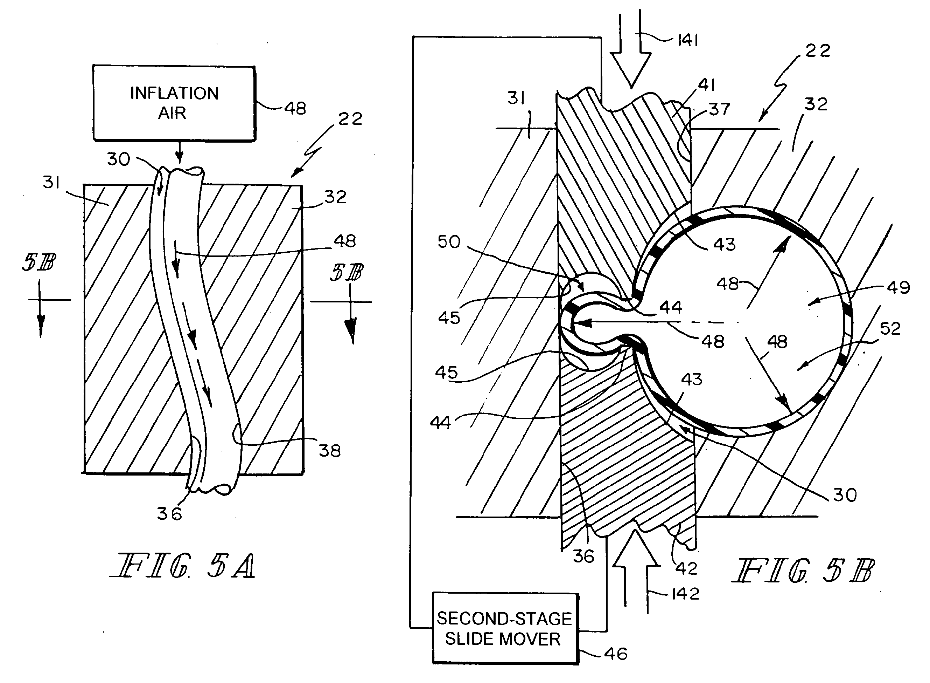

During a second stage of the blow-molding process, the two second-stage mold slides 41, 42 move toward one another in space 40 in directions 141, 142 under motive forces provided by second-stage slide mover 46 to begin to deform parison 29 as suggested, for example, in Figs. 5A and 5B. Parison 29 is "pinched" by opposing surfaces or portions 44 included in mold slides 41, 42 as suggested in Fig. 5B. In the illustrated embodiment, opposing second curved surfaces 45 of mold slides 41, 42 cooperate to form a small or second mold cavity 50 sized to form second conduit 26 therein as suggested in Fig. 6B. Opposing first curved surfaces or portions 43 of mold slides 41, 42 cooperate with C-shaped curved surface 38 of mold die 32 to form a larger or first mold cavity 52 sized to form first conduit 24 therein. Opposing straight surfaces or portions 44 cooperate to form a third mold cavity 54 sized to form web connector 28 therein.

In the illustrated embodiment, first curved surface 43 is a first "cutaway" surface that defines a first cutaway recess 143 as shown in Fig. 3B. Similarly, second curved surface 45 is a second "cutaway" surface that defines a second cutaway recess 145. Opposing straight surfaces 44 defines pinch surfaces that cooperate to pinch parison 29 along a length thereof to form side-by-side conduits 24, 26 in first and second cutaway recesses 143, 145 and web connector 28 between pinch surfaces 44.

A third cutaway recess 138 is defined by curved surface 38 of second first-stage mold die 32 as suggested in Fig. 3B. First and third cutaway recesses 143, 138 cooperate to form first mold cavity 52. Second cutaway recesses 145 cooperate to form second mold cavity 50.

While blow mold 22 is still closed, mold slides 41, 42 are moved to the extended positions shown in Fig. 6B to complete formation of first and second conduits 24, 26 and web connector 28. To release filler neck 14 from blow mold 22, second stage slide mover 46 is used to retract second-stage mold slides 41, 42 to positions shown, for example, in Fig. 3B and first-stage die mover 39 is used to move first-stage mold dies 31, 32 away from one another and blow mold 22 is thus "opened."

Using the method disclosed herein, it is unnecessary to produce two tubes or conduits separately and attach one tube or conduit to another tube using a secondary process. Such secondary processes add manufacturing costs. By producing two interconnected conduits from a single parison in a closed blow mold cavity in accordance with the present disclosure, potentially leaky or permeable unions or joints or welds and unwanted mold flash are avoided. Using the method disclosed herein, once a parison is expanded in a closed blow mold cavity, movable mold slides pinch a parison to produce two interconnected conduits while the blow mold is closed.

An illustrative method of forming a monolithic element including multiple conduits is illustrated in Figs. 3A-6B and comprises the steps of locating a parison 29 in a closed blow mold cavity 30 defined by opposing first and second first-stage mold dies 31, 32 and opposing first and second second-stage mold slides 41, 42, orienting a flat surface 36 on first first-stage mold die 31 to face toward parison 29 and a curved surface 38 on second first-stage mold die 32 to face toward parison 29 and flat surface 36, arranging the opposing first and second second-stage mold slides 41, 42 to move toward and away from one another along, for example, flat surface 36 of first first-stage mold die 31 in a space 40 provided between first and second first-stage mold dies 31, 32, inflating parison 29 to engage portions of second first-stage mold die 32 and portions of first and second second-stage mold slides 41, 42 to assume a first shape, as shown, for example, in Fig. 4B, and moving first and second second-stage mold slides 41, 42 toward one another along flat surface 36 of first first-stage mold die 31 to pinch the inflated parison 29 between first and second second-stage mold slides 41, 42. This method is used to establish in closed blow mold cavity 40 a first conduit 24 between first portions 43 of first and second second-stage mold slides 41, 42 and curved surface 38 of second first-stage die 32, a second conduit 26 between second portions 45 of first and second second-stage mold slides 41, 42, and a web connector 28 interconnecting first and second conduits 24, 26 to establish a monolithic element 14 including multiple conduits 24, 26 between third portions 44 of first and second second-stage mold slides 41, 42.

Each of first and second second-stage mold slides 41, 42 includes a first exterior corner 61 as shown, for example, in Fig. 3B. First exterior corner 61 is arranged to lie in closed blow mold cavity 40 to face toward curved surface 38 of second first-stage mold die 32 as shown in Fig. 3B. First exterior corner 61 is formed to include a deformation (pinching) edge 63 arranged to extend along a length of parison 29 located in closed blow mold cavity 40 as suggested in Fig. 3B. The inflating step comprises the steps of positioning parison 29 in a region of closed blow mold cavity 40 bounded in part by curved surface 38 of second first-stage mold die 32 and deformation edge 63 of first and second second-stage mold slides 41, 42 and blowing air into an interior region of parison 29 to expand parison 29 to contact curved surface 38 and the deformation edges 63 to establish the first shape of parison 29 as suggested, for example, in Fig. 4B.

Deformation edges 63 are arranged to lie in spaced-apart relation to one another and to curved surface 38 of second first-stage mold die 32 as shown, for example, in Fig. 3B. Air is blown into interior region 49 of parison 29 to inflate parison 29 to contact deformation edges 63 and curved surface 38 to cause the first shape of parison 29 to be an egg-shaped cross-sectional shape as suggested in Fig. 4B. First and third portions 43, 44 of first second-stage mold slide 41 intersect along a first straight line to form first exterior corner 61 and deformation edge 63 of first second-stage mold slide 41 as shown best in Fig. 3B. First portion 43 of first second-stage mold slide 41 is curved and has a radius of curvature that is about equal to a fixed radius of curvature of curved surface 38 of second first-stage mold die 32 as suggested, for example, in Fig. 3B. Second and third portions 45, 44 of first second-stage mold slide 41 intersect along a second straight line to form a second exterior corner 62 located between first exterior corner 61 and flat surface 36 of first first-stage mold die 31 as shown best in Fig. 3B. Second exterior corner 62 is arranged to lie in closed blow mold cavity 40 to face toward flat surface 36 of first first-stage mold die 31 and formed to include an auxiliary deformation (pinching) edge 64 that is arranged to lie in spaced-apart relation to deformation edge 63 of first exterior corner 61 to locate third surface 44 therebetween as shown, for example, in Fig. 3B.

First portion 43 of first second-stage mold slide 41 is a concave curved surface oriented to face toward second first-stage mold die 32 and formed to include a radius of curvature that is about equal to a radius of curvature of curved surface 38 of second first-stage mold die 32. First portion 43 of second second-stage mold slide 42 is also a concave curved surface oriented to face toward second first-stage mold die 32 and is about equal to the radius of curvature of curved surface 38 of second first-stage mold die 32 and concave curved surface 43 of first second-stage mold slide 41. Each of second portions 45 of first and second second-stage mold slides 41, 42 are concave curved surfaces having radii of curvature that are about equal to one another and lesser than the radius of curvature of curved surface 38 of second first-stage mold die 32. Each of third portions 44 of first and second second-stage mold slides 41, 42 are substantially flat surfaces and arranged to face toward one another.

## Claims

1. A method of forming a monolithic element including multiple conduits, the method comprising the steps of
providing a parison and
pinching the parison along a length thereof in a closed blow mold cavity to form a monolithic element comprising two side-by-side conduits interconnected by a web connector.

2. The method of claim 1, wherein the pinching step comprises the step of providing first and second first-stage mold dies lying in spaced-apart relation to one another and cooperating to form a portion of the closed blow mold cavity, the first first-stage mold die including a flat surface facing towards the parison and the second first-stage mold die including a curved surface facing toward the parison and towards the flat surface, and the pinching step further comprises the steps of providing first and second second-stage mold slides lying in spaced-apart relation to one another to form another portion of the closed blow mold cavity and moving the first and second second-stage mold slides relative to one another in the space between the first and second first-stage mold dies to pinch the parison along a length thereof in the closed blow mold cavity.

3. The method of claim 2, wherein the first and second second-stage mold slides are mounted to move toward and away from one another in the space provided between the first and second first-stage mold dies, each of the first and second second-stage mold slides includes a first surface, a second surface, and a third surface interconnecting the first and second surfaces, and when, during the pinching step, the first second-stage mold slide is moved relative to the second second-stage mold slide, the first, second, and third surfaces of the first and second second-stage mold slides assist in pinching the parison to form a first of the side-by-side conduits between the first surfaces, a second of the side-by-side conduits between the second surfaces, and the web connector between the third surfaces.

4. The method of claim 3, wherein the first surface of the first second-stage mold slide is curved and is oriented to face toward the second first-stage mold die and the second surface of the first second-stage mold slide is curved and is oriented to face toward the second surface of the second second-stage mold slide.

5. The method of claim 4, wherein the curved surface of the second first-stage mold die is concave and has a fixed radius of curvature, the first surface of the first second-stage mold slide is concave and has a first radius of curvature that is about equal to the fixed radius of curvature, and the second surface of the first second-stage mold slide is concave and has a second radius of curvature that is lesser than the first radius of curvature.

6. The method of claim 3, wherein the third surface of the first second-stage mold slide is interposed between the first and second surfaces of the first second-stage mold slide, the first and third surfaces of the first second-stage mold slide intersect along a first straight line to form a first exterior corner configured to mate with the parison in the closed blow mold during the pinching step to establish a junction between the web connector and the first of the side-by-side conduits, and the second and third surfaces of the first second-stage mold slide intersect along a second straight line to form a second exterior corner configured to mate with the parison in the closed blow mold during the pinching step to establish a junction between the web connector and the second of the side-by-side conduits.

7. The method of claim 6, wherein the third surface is substantially flat and each of the first and second surfaces is curved.

8. The method of claim 2, wherein the first and second second-stage mold slides are each formed to include a first cutaway recess, a second cutaway recess, and a pinch surface located between the first and second cutaway recesses, the pinch surface being positioned to lie in spaced-apart relation to the flat surface of the first first-stage mold die and in spaced-apart relation to an open mouth defined by the curved surface of the second first-stage mold die and when, during the pinching step, the first and second second-stage mold slides are moved toward one another, the pinch surfaces on the first and second second-stage mold slides cooperate to pinch the parison along a length thereof to form the side-by-side conduits in the cutaway recesses and the web connector between the pinch surfaces.

9. The method of claim 8, wherein the first cutaway recess is positioned to lie between the pinch surface and the open mouth of the second first-stage mold die and the second cutaway recess is positioned to lie between the flat surface of the first first-stage mold die and the pinch surface, the first cutaway recess is bounded by a curved edge having a first radius of curvature, the second cutaway recess is bounded by a curved edge having a second radius of curvature that is less than the first radius of curvature, and the pinched surface between the cutaway recesses is substantially flat.

10. The method of claim 9, wherein the curved edge of the first cutaway recess is concave and arranged to face toward the second first-stage mold die and the curved edge of the second cutaway recess is concave and arranged to face only toward the second cutaway recess of the second second-stage mold slide.

11. The method of claim 10, wherein the first cutaway recess cooperates with a third cutaway recess defined by the curved surface of the second first-stage mold die to form a first mold cavity sized to form the first of the side-by-side conduits and the second cutaway recess cooperates to form a second mold cavity sized to form the second of the side-by-side conduits upon movement of the first and second second-stage mold slides to mate with one another during the pinching step, and the pinch surfaces cooperate to form a third mold cavity sized to form the web connector therein during the pinching step.

12. The method of claim 1, wherein the pinching step comprises the steps of
providing first and second first-stage mold dies lying in spaced-apart relation to one another to create a space therebetween and cooperating to form a portion of the closed blow mold cavity, the first first-stage mold die including a flat surface facing toward the parison and toward the second first-stage mold die,
providing opposed first and second second-stage mold slides arranged to move in the space,
blowing inflation air into a central passageway formed in the parison to inflate the parison while the parison is deployed in a closed blow mold cavity defined by the first and second first-stage mold dies in cooperation with the first and second second-stage mold slides, and
directing the inflation air to urge a portion of the parison into engagement with a C-shaped curved surface of the second first-stage mold die and other portions of the parison further into the space to engage portions of the first and second second-stage mold slides, thereby providing the parison with an "egg-shaped" cross-sectional shape while the first and second second-stage mold slides remain apart from one another.

13. The method of claim 12, wherein the first and second second-stage mold slides include opposing first curved surfaces, opposing curved second surfaces, and opposing pinch surfaces, and the pinching step further comprises the step of moving the first and second second-stage mold slides toward one another in the space to deform the egg-shaped cross-sectional shape of the parison and pinch the parison between the pinch surfaces and to cause the opposing curved first surfaces of the first and second second-stage mold slides to cooperate with the C-shaped curved surface of the second first-stage mold die to form a mold cavity to form a first of the side-by-side conduits therein, the opposing curved second surfaces of the first and second second-stage mold slides to cooperate to form another mold cavity sized to form a second of the side-by-side conduits therein, and the opposing pinch surfaces to cooperate to form the web connector therein.

14. The method of claim 13, wherein each opposing pinch surface includes a pinching edge, each pinching edge is formed at the intersection of one of the curved first surfaces and a companion and adjacent one of the pinch surfaces of the first and second second-stage mold slides, and each pinching edge faces toward the C-shaped curved surface of the second first-stage mold die and cooperates to pinch a portion of the parison when the first and second second-stage mold slides are moved toward one another and toward the parison during the moving step.

15. The method of claim 1, wherein the pinching step comprises the steps of providing first and second first-stage mold dies lying in spaced-apart relation to one another and cooperating to form a space therebetween, providing first and second second-stage mold slides having portions arranged to lie within the space, and moving the first and second first-stage mold dies and the first and second second-stage mold slides relative to one another to create three chambers in the space and to pinch the parison to form the monolithic element in the closed blow mold during the pinching step, wherein
the first chamber is defined by a C-shaped opening in the second first-stage mold die and a first cutaway surface formed on each of the first and second second-stage mold slides,
the second chamber is defined by a second cutaway surface formed on each of the first and second second-stage mold slides and a flat surface on the first first-stage mold die, and
the third chamber is defined by a pinch surface of each first and second second-stage mold silde.

16. The method of claim 15, wherein the pinching step comprises the steps of inflating the parison and moving the first and second second-stage mold slides together such that
a first part of the parison fills the first chamber,
a second part of the parison is pushed into the second chamber,
a third part of the parison is pinched by the pinch surfaces in the third chamber, and wherein
the first of the side-by-side conduits is formed in the first chamber, the second of the side-by-side conduits is formed in the second chamber, and the web connector is formed in the third chamber.

17. The method of claim 1, wherein the pinching step comprises the steps of providing first and second first-stage mold dies lying in spaced-apart relation to one another and cooperating to form a portion of the closed blow mold cavity, the first first-stage mold die includes a flat surface facing towards the parison and the second first-stage mold die is formed to include an opening defined by an interior surface of the second first-stage mold die facing toward the flat surface of the first first-stage mold die and further comprising the steps of providing first and second second-stage mold slides and moving the first and second second-stage mold slides in a space between the first and second first-stage mold dies to pinch the parison along a length thereof.

18. The method of claim 17, wherein the first and second second-stage mold slides each include first and second cutaway surfaces connected by a pinch surface located therebetween, the first cutaway surface is positioned to lie between the pinch surface and the second first-stage mold die, each first cutaway surface is formed to include a first opening having a first dimension spanning the first opening, the second cutaway surface is positioned to lie between the flat surface of the first first-stage mold die and the pinch surface, and each second cutaway surface is formed to include a second opening having a second dimension spanning the second opening that is larger than the first dimension.

19. The method of claim 18, wherein the first opening of each first cutaway surface faces toward an opposing second second-stage mold slide and toward the second first-stage mold die and the second opening of each second cutaway surface faces only toward the second opening of an opposing second cutaway surface.

20. The method of claim 17, wherein the first cutaway surfaces on each first and second second-stage mold slide cooperate with the interior surface on the second first-stage mold die to define a first mold cavity forming a first of the side-by-side conduits and having a first cross-section dimension therein, the flat surface on the first first-stage mold die and the second cutaway surfaces on each first and second second-stage mold slide cooperate to define a second mold cavity forming a second of the side-by-side conduits and having a second cross-section dimension therein, and the flat surface of the first first-stage mold die is oriented to lie in tangent relation to an outer surface of the second of the side-by-side conduits formed in the second mold cavity.

21. The method of claim 20, wherein the second cross-section dimension is smaller than the first cross-section dimension.

22. A method of forming a monolithic element including multiple conduits, the method comprising the steps of
locating a parison in a closed blow mold cavity defined by opposing first and second first-stage mold dies and opposing first and second second-stage mold slides,
orienting a flat surface on the first first-stage mold die to face toward the parison and a curved surface on the second first-stage mold die to face toward the parison and the flat surface,
arranging the opposing first and second second-stage mold slides to move toward and away from one another along the flat surface of the first first-stage mold die in a space provided between the first and second first-stage mold dies,
inflating the parison to engage portions of the second first-stage mold die and portions of the first and second second-stage mold slides to assume a first shape, and
moving the first and second second-stage mold slides toward one another along the flat surface of the first first-stage mold die to pinch the inflated parison between the first and second second-stage mold slides to establish in the closed blow mold cavity a first conduit between first portions of the first and second second-stage mold slides and the curved surface of the second first-stage die, a second conduit between second portions of the first and second second-stage mold slides, and a web connector interconnecting the first and second conduits to establish a monolithic element including multiple conduits between third portions of the first and second second-stage mold slides.

23. The method of claim 22, wherein each of the first and second second-stage mold slides includes a first exterior corner arranged to lie in the closed blow mold cavity to face toward the curved surface of the second first-stage mold die and formed to include a deformation edge arranged to extend along a length of the parison located in the closed blow mold cavity and the inflating step comprises the steps of positioning the parison in a region of the closed blow mold cavity bounded in part by the curved surface of the second first-stage mold die and the deformation edge of the first and second second-stage mold slides and blowing air into an interior region of the parison to expand the parison to contact the curved surface and the deformation edges to establish the first shape of the parison.

24. The method of claim 23, wherein the deformation edges are arranged to lie in spaced-apart relation to one and to the curved surface of the second first-stage mold die and air is blown into the interior region of the parison to inflate the parison to contact the deformation edges and the curved surface to cause the first shape of the parison to be an egg-shaped cross-sectional shape.

25. The method of claim 23, wherein the first and third portions of the first second-stage mold slide intersect to form the first exterior corner and the deformation edge of the first second-stage mold slide.

26. The method of claim 25, wherein the first portion of the first second-stage mold slide is curved and has a radius of curvature that is about equal to a radius of curvature of the curved surface of the second first-stage mold die.

27. The method of claim 25, wherein the second and third portions of the first second-stage mold slide intersect to form a second exterior corner located between the first exterior corner and the flat surface of the first first-stage mold die and the second exterior corner is arranged to lie in the closed blow mold cavity to face toward the flat surface of the first first-stage mold die and formed to include an auxiliary deformation edge that is arranged to lie in spaced-apart relation to the deformation edge of the first exterior corner to locate the third surface therebetween.

28. The method of claim 22, wherein the first portion of the first second-stage mold slide is a concave curved surface oriented to face toward the second first-stage mold die and formed to include a radius of curvature that is about equal to a radius of curvature of the curved surface of the second first-stage mold die.

29. The method of claim 28, wherein the first portion of the second second-stage mold slide is a concave curved surface oriented to face toward the second first-stage mold die and is about equal to the radius of curvature of the curved surface of the second first-stage mold die and the concave curved surface of the first second-stage mold slide.

30. The method of claim 28, wherein each of the second portions of the first and second second-stage mold slides are concave curved surfaces having radii of curvature that are about equal to one another and lesser than the radius of curvature of the curved surface of the second first-stage mold die.

31. The method of claim 30, wherein each of the third portions of the first and second second-stage mold slides are substantially flat surfaces.

32. The method of claim 22, wherein each of the second portions of the first and second second-stage mold slides are concave curved surfaces having radii of curvature that are about equal to one another and lesser than the radius of curvature of the curved surface of the second first-stage mold die.

33. The method of claim 32, wherein each of the third portions of the first and second second-stage mold slides are substantially flat surfaces.

34. The method of claim 22, wherein each of the third portions of the first and second second-stage mold slides are substantially flat surfaces.

35. A method of forming a monolithic element including multiple conduits, the method comprising the steps of
locating a parison in a closed blow mold cavity,
inflating the parison in the closed blow mold cavity to form an inflated parison, and
pinching the inflated parison in the closed blow mold cavity to form a monolithic element comprising first and second conduits interconnected by a web connector in the closed blow mold cavity.
